# EUROPEAN PATENT SPECIFICATION

(11) **EP 2 623 767 B1**
(45) Date of publication and mention of the grant of the patent: **01.11.2017**
(21) Application number: 12153781.5
(22) Date of filing: 03.02.2012
(51) Int. Cl.: F03D 1/00, F03D 7/02, F03D 13/10

(54) **Method and controller for turning a hub of a wind turbine**
Verfahren und Steuergerät zum Drehen der Nabe einer Windturbine
Procédé et contrôleur pour tourner le moyeu d'une éolienne

(43) Date of publication of application: 07.08.2013
(73) Proprietor: Siemens Aktiengesellschaft, 80333 München (DE)
(72) Inventor: Deng, Heng, 7330 Brande (DK)

(56) References cited:
- EP-A2- 2 072 814
- WO-A1-2010/023285
- US-A1- 2005 012 487
- US-A1- 2008 191 483

## Description

### Field of invention

The present invention relates to the field of wind turbines. In particular, the present invention relates to a method for turning a hub of a wind turbine. Further, the invention relates to a controller for turning a hub of a wind turbine. Moreover, the invention relates to a wind turbine. Furthermore, the invention relates to a computer program.

### Art Background

During installation and maintenance of a wind turbine, a hub or a rotor of the wind turbine may need to be turned to a certain position and then fixed at that certain position, e.g. for inspecting, installing or replacing a rotor blade. However, if the blades of the wind turbine are not installed, it is not possible to use the wind to turn the hub of the wind turbine.

In case the wind turbine comprises a gear box, the hub can be turned by using an additional motor. The additional motor is installed in the wind turbine in such a way that it turns the hub of the wind turbine through the gear box. Due to the gear box, the requirements on torque and starting current for the additional motor are very low so that a comparatively small motor can be used. In case of a direct drive wind turbine, e.g. wind turbines without a gear box, the requirements on torque and starting current for the additional motor are much higher. Due to the higher requirements on torque and starting current in case of a direct drive wind turbine an additional motor as used in the case of a wind turbine with gear box may not suffice to turn the hub of a direct drive wind turbine.

There may be a need to improve a turning of a hub of a wind turbine during installation, replacement and/or maintenance. EP2072841A2 discloses a method of positioning a wind turbine rotor according to the prior art.

### Summary of the Invention

This need may be met by the subject matter according to the independent claims. Advantageous embodiments of the present invention are described by the dependent claims.

According to an aspect of the invention an open loop method for turning a hub of a wind turbine according to claim 1 is provided. This aspect of the invention is based on the idea that an electric generator may also be used as an electric motor.

In particular, the wind turbine may be a wind turbine without a gear box, e.g. a direct drive wind turbine. Furthermore, the wind turbine may as well be a wind turbine comprising a gear box. Rotor blades may be mountable and/or mounted at the hub of the wind turbine.

Further, the generator may be used for converting wind energy into electric energy. The generator of the wind turbine, in particular a wind turbine with full scale energy conversion, may be an asynchronous generator or a synchronous generator. For example, an asynchronous generator may be an induction generator and a synchronous generator may be a permanent magnet generator. In particular, the generator of the wind turbine may be driven by a frequency converter. Moreover, the generator may be a multi-phase ac generator.

Particularly, an electric excitation may be an electric voltage and/or an electric current. The electric excitation may be applied to at least one coil of the electric generator. Depending on the applied electric excitation, the generator may generate a torque. This generated torque may be used to turn the hub of the wind turbine to a certain (angular) position. Further, the generated torque may as well be used to fix the hub of the wind turbine to a certain (angular) position.

In normal operation the generator of the wind turbine may be controlled by a sensorless vector controller. Another possibility to control the generator of a wind turbine during normal operation may be to use a direct torque controller which may be used to regulate a stator power of the generator. In particular, an important parameter for controlling the generator of the wind turbine may be the rotor position and/or the rotor speed of the generator. The rotor position may be measured by an encoder or estimated based on voltage and current of the generator during its operation. Due to additional costs and additional maintenance requirements of an encoder, estimating a rotor position and a rotor speed based on actual voltage and actual current of the generator when rotor is rotating may be more preferred. However, an estimation of the rotor position and/or rotor speed may be very difficult when the rotor of the generator is turning at a slow speed or even standing still. Due to this a vector controller or a direct torque controller may not be applicable as a controller for turning a hub of a wind turbine to a certain position from a standing position.

The described method for turning a hub of a wind turbine is an open-loop scalar control method for turning the hub of the generator with a torque generated by the generator itself. In particular, the described method may have the advantage that no additional motor is needed to turn a hub of the wind turbine. The described method may allow for the reduction of a weight of the wind turbine, because the additional motor may be omitted. Further, a complexity of the wind turbine and a number of components of the wind turbine may be reduced. If the additional motor for turning the hub of the wind turbine during installation and/or maintenance may be omitted, the cost of a wind turbine may also be reduced. Moreover, the described method may be implemented without additional costs. Further, the described method may be implemented without changing the hardware of the wind turbine. Another advantage of the described method may be that there is no need for sensing or estimating a rotor speed and/or a rotor position. Thus the method may be suitable for wind turbine generators without encoders.

According to a further embodiment of the invention the applied electric excitation is an alternating electric excitation having a frequency ω.

An advantage of an alternating electric excitation may be that an alternating electric excitation may be particularly suited to generate a torque with the electric generator of the wind turbine. In particular, a rotor speed of the generator may depend on the frequency ω of the alternating electric excitation. Further, the speed of the hub of the generator during the turning procedure may depend on the speed of the rotor.

According to a further embodiment of the invention the applied electric excitation additionally comprises a constant offset electric excitation.

An advantage of a constant offset electric excitation may be to compensate for a voltage drop due to a stator resistance of the generator. The voltage drop due to the stator resistance may particularly be of importance at slow rotor speeds. Further, the constant offset electric excitation may allow that the full torque of the generator may be available even if the rotor of the generator is standing still. In particular, the constant offset electric excitation may be negligible at higher rotor speeds.

According to a further embodiment of the invention the applied alternating electric excitation is changed in time. This may provide the advantage that by changing the applied alternating electric excitation in time the turning of the hub of the wind turbine may be changed. Further, by changing the applied electric excitation a control of a hub movement may be improved.

According to a further embodiment of the invention the frequency ω of the applied alternating electric excitation is changed in time.

By changing the frequency ω of the applied alternating electric excitation, the speed of the rotor may be changed. An advantage may be that a control over a hub acceleration and/or deceleration may be improved.

According to a further embodiment of the invention the frequency ω of the applied alternating electric excitation is increased in time.

Preferably, the frequency ω of the applied alternating electric excitation may be linearly increased in time. By increasing the frequency ω of the applied alternating electric excitation, the hub of the wind turbine may be accelerated. In particular, the hub may be accelerated up to a predetermined speed. The predetermined speed may be chosen so that an operator may be able to stop the hub of the wind turbine at a certain position manually by pressing a button or by setting a flag in a control program.

According to a further embodiment of the invention the strength of the electric excitation applied to the generator of the wind turbine is changed in time. This may allow for a greater control variability.

According to a further embodiment of the invention the strength of the electric excitation applied to the generator of the wind turbine is increased in time. This may provide the advantage that a torque of the generator can be increased.

According to a further embodiment of the invention the frequency ω of the applied alternating electric excitation and the strength of the applied alternating electric excitation are changed in time in such a way that the resulting torque of the generator is constant in time.

In particular, the torque of the generator may be determined by the ratio of a generator voltage and generator frequency. This may provide the advantage that a resulting torque which is constant in time may allow for an increased stability of the wind turbine during installation and/or maintenance. A further advantage may be that the hub of the wind turbine may be turned using a constant torque.

According to a further embodiment of the invention the method further comprises calculating the applied electric excitation. This may allow for a realization of the invention only with a simple but effective software and/or hardware control.

According to a further embodiment of the invention calculating the applied electric excitation is carried out in abc frame.

In particular, the abc frame may be a stationary frame of a three-phase electric excitation. An advantage of calculating the applied electric excitation in abc frame may be that the calculated electric excitation may be directly used to control the generator.

According to a further embodiment of the invention calculating the applied electric excitation is carried out in αβ frame.

In particular, the αβ frame may be connected to the abc frame by a so called Clarke-Transformation. This may provide the advantage that an implementation of the calculation may be easier and the calculation may be simpler as compared to calculating the applied electric excitation in abc frame.

According to a further aspect of the invention a wind turbine comprising an electric generator and an open loop controller for controlling a rotational movement of a hub of the wind turbine according to claim 12 is provided.

The described controller may in particular be implemented within a wind turbine controller which is used for controlling the operation of the respective wind turbine. Furthermore, the controller and the unit may be realized as a single unit.

According to a further aspect of the invention a computer program for controlling a rotational movement of a hub of a wind turbine is provided, wherein the computer program, when executed by a processor, is adapted to perform the above described method.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In particular, the computer program may be stored on a computer-readable medium. The computer-readable medium may be readable by a computer or a processor. The computer-readable medium may be, for example but not limited to, an electric, magnetic, optical, infrared or semiconductor system, device or transmission medium. The computer-readable medium may include at least one of the following media: a computer-distributable medium, a program storage medium, a record medium, a computer-readable memory, a random access memory, an erasable programmable read-only memory, a computer-readable software distribution package, a computer-readable signal, a computer-readable telecommunications signal, computer-readable printed matter, and a computer-readable compressed software package.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a known wind turbine with a gear box and an additional motor.
Figure 2 shows a direct drive wind turbine with a controller for controlling a rotational movement of a hub of a wind turbine according to an embodiment of the invention.
Figure 3 depicts a control architecture for turning a hub of a wind turbine according to an exemplary embodiment of the invention.
Figure 4 depicts a further control architecture for turning a hub of a wind turbine according to an exemplary embodiment of the invention.

### Detailed Description

The illustration in the drawing is schematically. It is noted that in different figures, similar or identical elements are provided with the same reference signs or with reference signs, which are different from the corresponding reference signs only within the first digit.

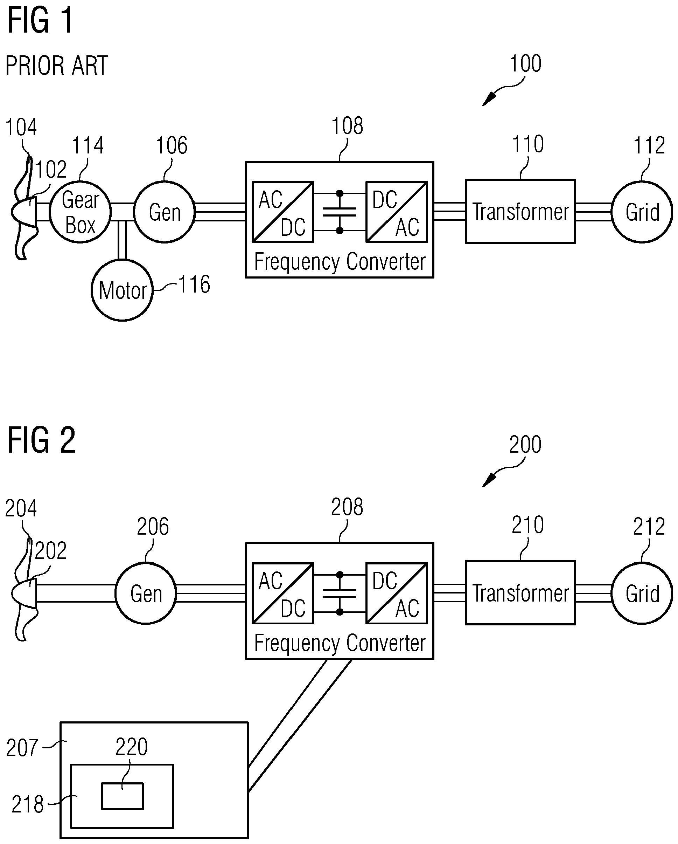

Figure 1 shows a known wind turbine 100 with a gear box and an additional motor according to prior art. The wind turbine 100 comprises a hub 102 with rotor blades 104. In normal operation mode, wind energy is picked up by the rotor blades 104 which then turn the hub 102 of the wind turbine 100. The wind energy is converted into electrical energy by an electric generator 106 which is connected to the hub 102. The generated electrical energy is directed to a frequency converter 108 and a transformer 110 before it is fed into a power grid 112. The frequency converter, which performs an AC to DC and a DC to AC conversion, is often also called a power converter. A torque which is transmitted from the hub 102 to the generator 106 can be changed by a gear box 114. The wind turbine further comprises an additional motor 116 which may be used during maintenance and/or installation for turning the hub 102. The torque which is needed to turn the hub may be reduced due to the gear box 114.

Figure 2 shows a direct drive wind turbine with a controller 218 for controlling a rotational movement of a hub 202 of a wind turbine 200 according to an embodiment of the invention. The wind turbine 200 comprises a hub 202 with rotor blades 204. In normal operation mode, wind energy is picked up by the rotor blades 204 which then turn the hub 202 of the wind turbine 200. The wind energy is converted into electrical energy by an electric generator 206 which is connected to the hub. The generated electrical energy is directed to a frequency converter 208 and a transformer 210 before it is fed into a power grid 212. The electric generator 206 is controlled by the Pulse Width Modulation (PWM) switching of the frequency converter 208. The PWM switching of a generator-side converter in the frequency converter 208 is controlled by a generator controller 207. Within this generator controller 207 is a controller 218 for controlling a rotational movement of a hub 202 of the wind turbine 200 implemented. The controller 218 for controlling a rotational movement of a hub 202 of the wind turbine comprises a unit 220 which controls the PWM switching signal of the frequency converter 208 so that the frequency converter applies an electric excitation to the electric generator 206 of the wind turbine 200 in such a manner that, a torque is generated with the electric generator 206, wherein the generated torque depends on the electric excitation, and the hub 202 of the wind turbine 206 is turned using the generated torque of the electric generator 206. However, the unit 220 can also be omitted. In this case the controller 218 controls the PWM switching signal of the frequency converter 208. Further, the controller 218 and the unit 220 can also be realized as a single unit.

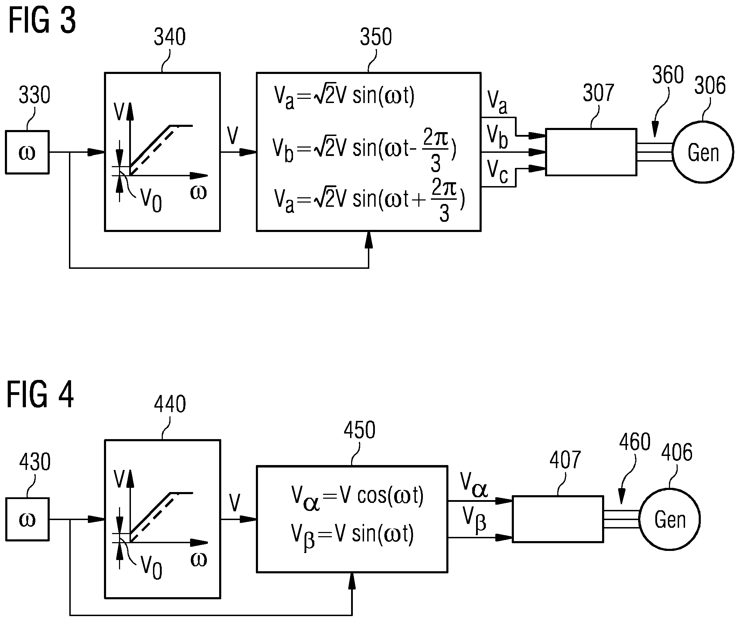

Figure 3 depicts a control architecture for turning a hub of a wind turbine according to an exemplary embodiment of the invention. Depending on an applied electric excitation a torque is generated by the electric generator 306. According to the described control architecture, the generated torque is used to turn the hub of the wind turbine. The frequency ω of the applied alternating electric excitation determines a speed with which the hub of the wind turbine is turned. For example, if the frequency ω is increased in time the hub is accelerated and the speed of the hub increased.

The generated torque depends on the ratio between the strength of the applied alternating electric excitation and the frequency of the applied alternating electric excitation. In order to keep to generated torque constant, the strength of the applied electric excitation has to be changed in accordance with a frequency change of the applied excitation. As indicated with reference numeral 330, the required frequency ω of the electric excitation is determined, which depends on the designated speed of the hub of the wind turbine. Next, as indicated with reference numeral 340 the required strength V of the electric excitation is determined. V₀ represent a constant offset electric excitation which compensate a voltage drop due to a stator resistance of the generator. As indicated with reference numeral 350, the applied electric excitation is then calculated in abc frame depending on the required strength and frequency of the electric excitation and fed to a generator controller 307 of the wind turbine. According to the embodiment described here, the generator controller 307 comprises a pulse width modulation unit and a frequency converter which are not explicitly depicted in figure 3. The pulse width modulation unit may be configured for controlling the PWM switching of the frequency converter. Next, as indicated with reference numeral 360, the alternating electric excitation is applied to the electric generator 306 of the wind turbine. For example, the alternating electric excitation can be applied by a generator side of the frequency converter.

Figure 4 depicts a further control architecture for turning a hub of a wind turbine according to an exemplary embodiment of the invention. Depending on an applied electric excitation a torque is generated by the electric generator 406. According to the described control architecture, the generated torque is used to turn the hub of the wind turbine. The frequency ω of the applied alternating electric excitation determines a speed with which the hub of the wind turbine is turned. For example, if the frequency ω is increased in time the hub is accelerated and the speed of the hub increased.

The generated torque depends on the ratio between the strength of the applied alternating electric excitation and the frequency of the applied alternating electric excitation. In order to keep to generated torque constant, the strength of the applied electric excitation has to be changed in accordance with a frequency change of the applied excitation.

As indicated with reference numeral 430, the required frequency ω of the electric excitation is determined, which depends on the designated speed of the hub of the wind turbine. Next, as indicated with reference numeral 440 the required strength V of the electric excitation is determined. V₀ represent a constant offset electric excitation which compensate a voltage drop due to a stator resistance of the generator. As indicated with reference numeral 450, the applied electric excitation is then calculated in αβ frame depending on the required strength and frequency of the electric excitation and fed to a generator controller 407 of the wind turbine. According to the embodiment described here, the generator controller 407 comprises a pulse width modulation unit and a frequency converter, which are not explicitly depicted in figure 4. The pulse width modulation unit may be configured for controlling a PWM switching of the frequency converter. Next, as indicated with reference numeral 460, the alternating electric excitation is applied to the electric generator 406 of the wind turbine. For example, the alternating electric excitation can be applied by a generator side of the frequency converter.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. An open loop method for turning a hub (202) of a wind turbine (200), the method comprising:
determining (330, 430) a frequency (ω) of an electric excitation required depending on a designated speed of the hub (202),
determining (340, 440) a required strength (V) of an electric excitation to an electric generator (206, 306, 406) of the wind turbine to keep a torque to be applied to the hub (202) constant;
calculating (350, 450) the electric excitation,
applying (360, 460) the electric excitation to the electric generator (206, 306, 406) for generating the torque with the electric generator; and
applying the generated torque of the electric generator (206, 306, 406) to the hub (202) for turning the hub (202) of the wind turbine (200).

2. The method according to the preceding claim, wherein
the hub (202) of the wind turbine (200) is turned to a certain angular position using the generated torque of the electric generator (206, 306, 406); and
the hub (202) is fixed to the certain angular position using the generated torque of the electric generator (206, 306, 406).

3. The method according to the claim 1 or 2, wherein
the applied electric excitation is an alternating electric excitation having a frequency ω.

4. The method according to the preceding claim, wherein
the applied electric excitation additionally comprises a constant offset electric excitation.

5. The method according to claim 3 or 4, wherein
the applied alternating electric excitation is changed in time.

6. The method according to the preceding claim 5, wherein the frequency ω of the applied alternating electric excitation is changed in time.

7. The method according to the preceding claim 6, wherein the frequency ω of the applied alternating electric excitation is increased in time.

8. The method according to any one of the claims 5 to 7, wherein
the strength of the electric excitation applied to the generator (206, 306, 406) of the wind turbine is changed in time.

9. The method according to the preceding claim 8, wherein the strength of the electric excitation applied to the generator (206, 306, 406) of the wind turbine is increased in time.

10. The method according to claim 1, wherein
calculating the applied electric excitation is carried out in abc frame.

11. The method according to the claim 1, wherein
calculating the applied electric excitation is carried out in αβ frame.

12. A wind turbine (200) comprising an electric generator (206, 306, 406) and an open loop controller (218) for controlling a rotational movement of a hub (202) of the wind turbine (200), the controller comprising
a unit (220) for applying an electric excitation to an electric generator (206, 306, 406) of the wind turbine in such a manner that,
a torque is generated with the electric generator (206, 306, 406), wherein the generated torque depends on the ratio between a strength of an applied electric excitation and the frequency (ω) of the applied electric excitation, the frequency (ω) depending on a designated speed of the hub (202) and the strength of the applied electric excitation being determined to keep the torque constant, and
the hub (202) of the wind turbine (200) is turned at the designated speed using the generated torque of the electric generator (206, 306, 406).

13. Computer program for controlling a rotational movement of a hub (202) of a wind turbine (200), wherein the computer program, when executed by a processor, is adapted to perform a method according to any one of the claims 1 to 11.

## Patentansprüche

1. Steuerverfahren zum Drehen einer Nabe (202) einer Windturbine (200), das Folgendes umfasst:
Bestimmen (330, 430) einer erforderlichen Frequenz (ω) einer elektrischen Erregung in Abhängigkeit von einer festgelegten Drehzahl der Nabe (202),
Bestimmen (340, 440) einer erforderlichen Stärke (V) einer elektrischen Erregung für einen elektrischen Generator (206, 306, 406) der Windturbine zwecks Konstanthalten eines an die Nabe (202) anzulegenden Drehmoments,
Berechnen (350, 450) der elektrischen Erregung,
Anwenden (360, 460) der elektrischen Erregung an dem elektrischen Generator (206, 306, 406) zum Erzeugen des Drehmoments mit dem elektrischen Generator und
Anwenden des erzeugten Drehmoments des elektrischen Generators (206, 306, 406) an der Nabe (202) zum Drehen der Nabe (202) der Windturbine (200).

2. Verfahren nach dem vorhergehenden Anspruch, wobei
die Nabe (202) der Windturbine (200) unter Verwendung des erzeugten Drehmoments des elektrischen Generators (206, 306, 406) in eine bestimmte Winkelposition gedreht wird und
die Nabe (202) unter Verwendung des erzeugten Drehmoments des elektrischen Generators (206, 306, 406) in der bestimmten Winkelposition festgestellt wird.

3. Verfahren nach Anspruch 1 oder 2, wobei
es sich bei der angewendeten elektrischen Erregung um eine elektrische Wechselerregung mit einer Frequenz ω handelt.

4. Verfahren nach dem vorhergehenden Anspruch, wobei die angewendete elektrische Erregung zusätzlich eine konstante versetzte elektrische Erregung umfasst.

5. Verfahren nach Anspruch 3 oder 4, wobei
die angewendete elektrische Wechselerregung mit der Zeit verändert wird.

6. Verfahren nach dem vorhergehenden Anspruch 5, wobei die Frequenz ω der angewendeten elektrischen Wechselerregung mit der Zeit verändert wird.

7. Verfahren nach dem vorhergehenden Anspruch 6, wobei die Frequenz ω der angewendeten elektrischen Wechselerregung mit der Zeit erhöht wird.

8. Verfahren nach einem der Ansprüche 5 bis 7, wobei die Stärke der an dem Generator (206, 306, 406) der Windturbine angewendeten elektrischen Erregung mit der Zeit verändert wird.

9. Verfahren nach dem vorhergehenden Anspruch 8, wobei die Stärke der an dem Generator (206, 306, 406) der Windturbine angewendeten elektrischen Erregung mit der Zeit erhöht wird.

10. Verfahren nach Anspruch 1, wobei
das Berechnen der angewendeten elektrischen Erregung in einem abc-System erfolgt.

11. Verfahren nach Anspruch 1, wobei
das Berechnen der angewendeten elektrischen Erregung in einem αβ-System erfolgt.

12. Windturbine (200) mit einem elektrischen Generator (206, 306, 406) und einer Steuerung (218) zum Steuern einer Drehbewegung einer Nabe (202) der Windturbine (200), wobei die Steuerung Folgendes umfasst:
eine Einheit (220) zum Anwenden einer elektrischen Erregung an einem elektrischen Generator (206, 306, 406) der Windturbine, so dass
mit dem elektrischen Generator (206, 306, 406) ein Drehmoment erzeugt wird, wobei das erzeugte Drehmoment von dem Verhältnis zwischen einer Stärke einer angewendeten elektrischen Erregung und der Frequenz (ω) der angewendeten elektrischen Erregung abhängig ist, die Frequenz (ω) von einer festgelegten Drehzahl der Nabe (202) abhängig ist und die Stärke der angewendeten elektrischen Erregung so festgelegt ist, dass das Drehmoment konstant bleibt, und
die Nabe (202) der Windturbine (200) unter Verwendung des erzeugten Drehmoments des elektrischen Generators (206, 306, 406) mit der festgelegten Drehzahl gedreht wird.

13. Computerprogramm zum Steuern einer Drehbewegung einer Nabe (202) einer Windturbine (200), wobei das Computerprogramm so ausgelegt ist, dass es, wenn es von einem Prozessor ausgeführt wird, ein Verfahren nach einem der Ansprüche 1 bis 11 ausführt.

## Revendications

1. Un procédé en boucle ouverte destiné à faire tourner un moyeu (202) d'une turbine éolienne (200), le procédé comprenant :
la détermination (330, 430) d'une fréquence (ω) d'une excitation électrique requise en fonction d'une vitesse désignée du moyeu (202),
la détermination (340, 440) d'une intensité (V) requise d'une excitation électrique appliquée à un générateur électrique (206, 306, 406) de la turbine éolienne de façon à maintenir un couple à appliquer au moyeu (202) constant,
le calcul (350, 450) de l'excitation électrique,
l'application (360, 460) de l'excitation électrique au générateur électrique (206, 306, 406) de façon à générer le couple avec le générateur électrique, et
l'application du couple généré du générateur électrique (206, 306, 406) au moyeu (202) de façon à faire tourner le moyeu (202) de la turbine éolienne (200).

2. Le procédé selon la revendication précédente, dans lequel
le moyeu (202) de la turbine éolienne (200) est tourné vers une position angulaire donnée au moyen du couple généré du générateur électrique (206, 306, 406), et
le moyeu (202) est fixé à la position angulaire donnée au moyen du couple généré du générateur électrique (206, 306, 406).

3. Le procédé selon la revendication 1 ou 2, dans lequel l'excitation électrique appliquée est une excitation électrique alternée possédant une fréquence ω.

4. Le procédé selon la revendication précédente, dans lequel l'excitation électrique appliquée comprend additionnellement une excitation électrique à décalage constant.

5. Le procédé selon la revendication 3 ou 4, dans lequel l'excitation électrique alternée appliquée est modifiée au fil du temps.

6. Le procédé selon la revendication précédente 5, dans lequel la fréquence ω de l'excitation électrique alternée appliquée est modifiée au fil du temps.

7. Le procédé selon la revendication précédente 6, dans lequel la fréquence ω de l'excitation électrique alternée appliquée est augmentée au fil du temps.

8. Le procédé selon l'une quelconque des revendications 5 à 7, dans lequel l'intensité de l'excitation électrique appliquée au générateur (206, 306, 406) de la turbine éolienne est modifiée au fil du temps.

9. Le procédé selon la revendication précédente 8, dans lequel l'intensité de l'excitation électrique appliquée au générateur (206, 306, 406) de la turbine éolienne est augmentée au fil du temps.

10. Le procédé selon la revendication 1, dans lequel le calcul de l'excitation électrique appliquée est effectué dans une trame abc.

11. Le procédé selon la revendication 1, dans lequel le calcul de l'excitation électrique appliquée est effectué dans une trame αβ.

12. Une turbine éolienne (200) comprenant un générateur électrique (206, 306, 406) et un dispositif de commande à boucle ouverte (218) destiné à la commande d'un mouvement de rotation d'un moyeu (202) de la turbine éolienne (200), le dispositif de commande comprenant
une unité (220) destinée à l'application d'une excitation électrique appliquée à un générateur électrique (206, 306, 406) de la turbine éolienne de telle manière qui :
un couple est généré avec le générateur électrique (206, 306, 406), le couple généré dépendant du rapport entre une intensité d'une excitation électrique appliquée et la fréquence (ω) de l'excitation électrique appliquée, la fréquence (ω) dépendant d'une vitesse désignée du moyeu (202), et l'intensité de l'excitation électrique appliquée étant déterminée de façon à maintenir le couple constant, et
le moyeu (202) de la turbine éolienne (200) est tourné à la vitesse désignée au moyen du couple généré du générateur électrique (206, 306, 406).

13. Un programme informatique destiné à la commande d'un mouvement de rotation d'un moyeu (202) d'une turbine éolienne (200), le programme informatique, lorsqu'il est exécuté par un processeur, étant adapté de façon à exécuter un procédé selon l'une quelconque des revendications 1 à 11.
